Europäisches Patentamt

European Patent Office

Office européen des brevets

(11) Publication number: **0 268 003**
**A2**

## EUROPEAN PATENT APPLICATION

(21) Application number: **87101600.2**

(22) Date of filing: **06.02.87**

(51) Int. Cl.⁴: **A01F 15/00** , **B30B 11/22**

(30) Priority: **14.11.86 GB 8627264**

(43) Date of publication of application:
**25.05.88 Bulletin 88/21**

(84) Designated Contracting States:
**DE ES FR GB IT NL**

(71) Applicant: **DEERE & COMPANY**
**1 John Deere Road**
**Moline Illinois 61265(US)**

(72) Inventor: **Geiser, Jens**
**Hohlstrasse 12**
**D-6660 Zweibrücken(DE)**

(74) Representative: **Collins, Geoffrey Stainton et al**
**c/o Reddie & Grose 16 Theobalds Road**
**London WC1X 8PL(GB)**

(54) **Bale density control system for a machine for forming cylindrical bales of crop.**

(57) A machine for forming large cylindrical bales of hay has a baling chamber consisting of a frusto-conical crop receiving portion (18) and a cylindrical crop discharge portion (22). The portions are arranged end-to-end and are defined by rolls which are driven to roll the crop round on itself into the form of a bale. The bale is compacted in the discharge portion by being forced by incoming crop against an abutment plate (52) which is hydraulically controlled. The bale is wrapped with twine from a tying device and severed by a cutter before being released through a gate (30). The whole operation is continuous.

In order to produce bales with a desirable density without undue stress to the machine, a control system (58) relieves the hydraulic pressure affording the resistance to bale movement by the abutment plate (52). Sensors (60, 62) detect any drive torque of the machine outside a predetermined range and any lack of advancement of the bale, and their outputs are fed to a computer (64) controlling a relief valve (66) enabling the abutment plate (52) to yield and the growing bale to advance further.

FIG. 3

# Bale density control system for a machine for forming cylindrical bales of crop

This invention relates to a baling machine for forming cylindrical bales of crop and to a bale density control system for such a machine.

Machines, towed by a tractor, for forming large cylindrical bales of hay (so called "round balers") are well known. The size of the bales is around 1.5 or 2 metres in diameter and in length. As the machine advances, the crop is removed from a windrow by a pick-up mechanism and delivered rearwardly to a baling chamber where it is rolled into a bale between rolls or belts. The completed bale is tied with twine to maintain its shape and is discharged through a gate formed by a rear portion of the machine. One such machine is described in our EP-A-0 151 665.

The feeding of crop to the chamber needs to be halted during tying and discharge, and various proposals have been made to render the process continuous. Basically these involve the provision of an additional chamber which is ahead (in the direction of travel of the machine) of the main baling chamber. This additional chamber can be closed off from the main chamber and so crop can continue to be fed to the former whilst the final steps of the baling procedure are being carried out in the main chamber. After bale discharge, the additional chamber is opened to the main chamber and crop then transferred from it to the main chamber. A machine of this type is described in our EP-A-0 149 368.

A machine which produces a small diameter rod-shaped product of compacted crop is proposed in DE-A-1 948 555. It has a compacting chamber consisting of a frusto-conical portion opening at its larger end into a cylindrical portion, the portions being defined by driven rolls. Crop is fed into the frusto-conical portion and finally discharged axially at the end of the cylindrical portion. The process is continuous and the portions are always open to one another there being no necessity to close one off from the other, and therefore the arrangement is simple. However, if large diameter products of bale size were produced by the machine they would tend to be loosely formed and therefore to lose their shape during handling.

In our co-pending British patent application 8627262 (of which the priority date is not earlier than that of the present application) we have described and claimed an invention which enables a large cylindrical bale of crop of more enduring shape to be produced by a simple machine with a chamber comprising a frusto-conical portion and a cylindrical portion, defined by rolls.

According to that invention a baling machine for forming cylindrical bales of crop has: a baling chamber comprising a frusto-conical crop receiving portion and a cylindrical crop discharge portion arranged end-to-end with the larger end of the receiving portion opening into the discharge portion, the portions being defined by rolls arranged to roll the crop into a bale and rolls of the receiving portion being driven; a hydraulic piston and cylinder unit; an abutment plate connected thereto which yieldably resists bale movement in the lengthwise direction of the discharge portion; and a cutter arranged to sever the bale. Such a baling machine will be hereinafter referred to as a "said baling machine" or as a "baling machine as herein defined".

The abutment plate serves for compaction of the bale which is forced by incoming crop against it so that the bale is a firmer and more easily handled product, but preferably for this latter purpose apparatus is provided for enabling the bale to be wrapped with twine or other tying material comprising a holder for the material and a guide arranged to supply the tying material between neighbouring rolls of the discharge portion to the outer surface of the bale for wrapping round the bale.

The completed bale can be discharged from the machine either through a gate in the discharge portion or through its downstream end with the abutment plate withdrawn a sufficient distance from that end to permit passage of the bale between the press and the end.

In order to enable smooth advancement of crop from the receiving portion to the discharge portion, the portions desirably share a common axis which may extend upwardly so that the crop is raised during its passage through the portions from a low level at which it receives crop to a high level at which the crop is discharged into a waggon or onto the ground. The angle of the axis to the horizontal can be in the range 10° to 30° and preferably 15° to 20°.

The present invention concerns a control system for the bale density whereby the density imparted to the bale can be controlled in dependence on the conditions obtaining as the crop is baled so that it is possible to produce bales with greater uniformity and with more desirable and precise compaction without over-compaction or undue stress to the machine.

According to the present invention a bale density control system, for a baling machine as herein defined, comprises sensing means arranged to detect a compressing load on the bale which exceeds a predetermined amount and means for adjusting pressure in the piston and cylinder unit operable to reduce resistance of the abutment plate to the said bale movement on an overload being detected.

The inventive concept includes a said baling machine having a said control system.

The sensing means can comprise a sensor arranged to detect insufficient lengthwise movement of the bale. The sensing means can also comprise (alternatively or additionally) a sensor arranged to detect torque in the drive for said rolls of the receiving portion which differs from a predetermined range.

An embodiment of the invention will now be described with reference to the accompanying diagrammatic drawings in which:

Fig. 1 shows from above a said baling machine drawn by a tractor along a windrow of hay;

Fig. 2 is a view looking from the rear in Fig. 1;

Fig. 3 is a perspective view, from above and to the right, of a control system for bale density in position on the machine of Fig. 1;

Fig. 4 is a plan view of part of a sensor in Fig. 3; and

Fig. 5 is a plan view of the sensor of Fig. 4 in a further position.

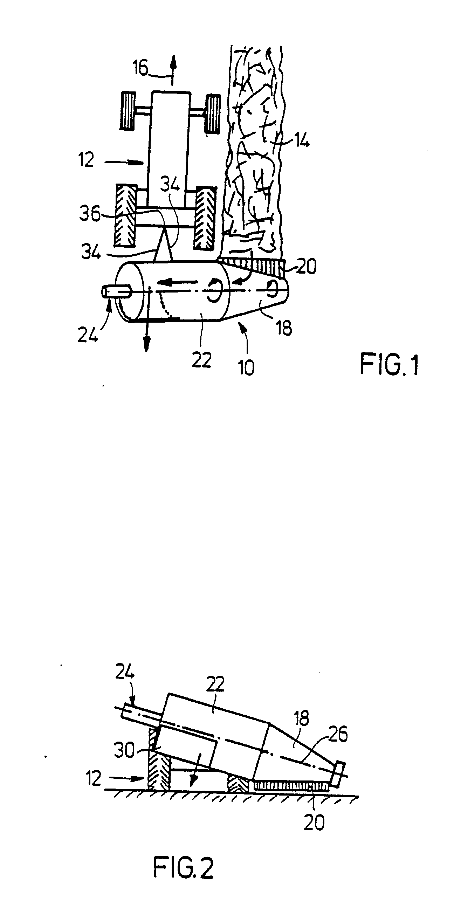

In Figures 1 and 2 a baling machine 10 is drawn by a tractor 12 along a windrow 14 of hay in the direction of arrow 16. The machine 10 has a baling chamber consisting of a frusto-conical crop receiving portion 18, to which crop is fed by a pick-up 20 which lifts the hay from the windrow 14, and a cylindrical crop discharge portion 22 into which the larger end of the portion 18 opens. An abutment device 24 is arranged in the discharge portion 22 and is shown in its withdrawn position at the distal or downstream end thereof. The portions 18, 22 share a common axis 26 which runs laterally of the windrow 14 and the tractor 12 and which is at an angle of about 15° to the horizontal so that the hay is raised from pick-up level and delivered as a cylindrical bale through a gate 30 on the underside of the upper end of the discharge portion 22. Crop flow is indicated by (unnumbered) arrows in Figures 1 and 2.

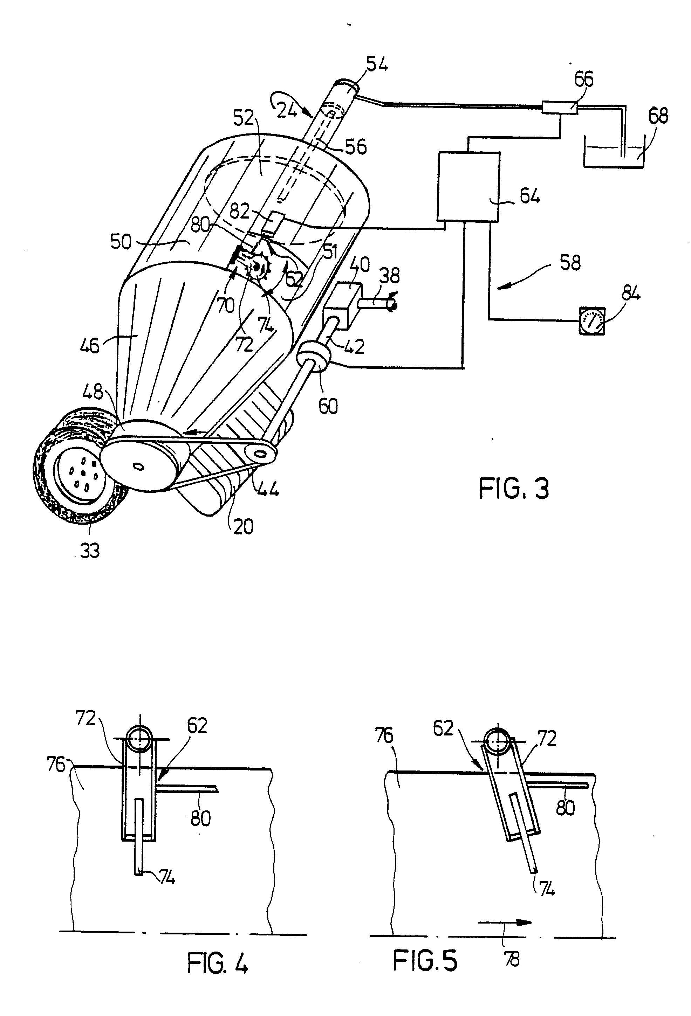

The machine 10 has a support frame, mounted on wheels of which the right hand one 33 only is shown, which includes two drawing beams 34 extending forwardly in a converging manner to meet at a point of attachment 36 to the tractor 12. Power is delivered from the tractor by a conventional longitudinal power take-off shaft 38 (Fig. 3), via a gearbox 40, through a main transverse drive shaft 42, over a longitudinal belt drive 44. The frame not only supports the crop receiving and discharge portions 18, 22 but also the pick-up 20 which in the working position of Fig. 1 straddles the windrow 14. The length of the pick-up 20 is coterminous with that of the receiving portion 18 and it extends below the forward half of this portion.

The machine 10 has been described in detail in our aforesaid co-pending British patent application so will be dealt with only briefly here.

The crop receiving portion 18 is formed by some fifteen driven rolls 46 which are disposed so as to follow geometrically the contour of a frusto-cone (each roll running from end to end of the frusto-cone) and are themselves frusto-conical, the smaller diameter ends of the rolls being at the smaller diameter upstream end of the receiving portion 18. The rolls 46 are rigidly attached to trunnion shafts, at their upstream ends, which shafts extend into a gearbox 48 in which they are splined to meshing drive gears driven from the power take-off shaft 38 of the tractor 12 via the belt 44. The shafts are carried by the support frame. The fifteen rolls 46 are spaced regularly apart except that a gap where a roll might otherwise fit is left between two neighbouring rolls on the underside associated with a rearward discharge portion of the pick-up 20 to provide an inlet for crop to be delivered into the receiving portion 18 from the pick-up.

The crop discharge portion 22 is also formed from rolls, i.e. rolls 50, this time numbering sixteen in all. The sixteenth roll is in a position corresponding to the inlet in the crop receiving portion 18 and is an idler roll, whilst the remaining fifteen rolls are aligned with those in the portion 18. They follow the contour of a cylinder (each roll running from end to end of the cylinder except where provision is made for the gate 30 and for an aperture 51 to permit bale cutting as referred to below) and most are driven by the rolls 46. The gate 30 can be swung between its closed working position and an open position in which a completed bale can pass through it for discharge.

The abutment device 24 comprises an abutment plate 52, within the cylinder formed by the rolls 50, and a hydraulic piston and cylinder unit of which the cylinder 54 is held rigidly and of which the piston 56 carries the abutment plate 52 which is journalled to it so as to be freely rotatable.

The hydraulic piston and cylinder unit yieldably resists bale movement through the discharge portion 22 by way of the abutment plate 52 and is arranged so that there is a varying resistance of the plate to the advancing bale to ensure greater uniformity in the density of completed bales, the resistance varying in accordance with the conditions obtaining, e.g. the type of crop, the amount of crop passing through the inlet, and its physical condition (particularly whether it is wet or dry). These factors affect the resistance of the crop to being baled and thus the desired hydraulic pressure in the piston and cylinder unit.

A bale tying device (not shown) comprising a holder for twine or other tying material and a guide is mounted exteriorly of the discharge portion 22 (in the region of the aperture 51) at its upstream end at the leading side with respect to the direction of travel of the machine so as to supply twine continuously through the aperture to the outer surface of the bale being formed to wrap round it in order to secure the form of the bale.

A cutter (also not shown) is similarly positioned, but just downstream of the tying device, and is movable progressively (on a radial path) between an inoperative position at which it is clear of the discharge portion 22 and a "cut completed" position in which it passes through the aperture 51 to the axis 26.

Thus far, the baling machine is mainly as already described in our said co-pending application.

A control system 58 for bale density is provided which is designed to relieve pressure in the hydraulic cylinder 54 and hence reduce the resistance of the plate 52 to bale movement. The principal components of the control system 58 are: a torque sensor 60 on the shaft 42; a bale movement sensor 62 which detects such movement in the axial (lengthwise) direction of the discharge portion 22; a computer 64 to which the sensors 60 and 62 are linked; and a flow valve 66 which is in a hydraulic line between the cylinder 54 and a sump 68 and which is controlled by an output from the computer 64 to regulate the pressure in the cylinder 54 as just mentioned.

The bale movement sensor 62 includes a control wheel device 70 mounted to extend into the aperture 51 and consisting of a swingable arm 72 at the distal end of which there is a bale contact in the form of a cog wheel 74 which can rotate freely in contact with the bale (numbered 76 in Fi gures 4 and 5). The arm 72 is loaded to its starting position, as shown in Fig. 4, which is transverse to the axis of the discharge portion 22. Advancing axial movement of the bale 76, indicated by arrow 78 in Fig. 5, causes swinging movement of the arm away from its starting position to a position such as that shown in Fig. 5. The arm is attached to a sensing rod 80 which is linked to a sensing box 82 which detects movement of the rod 80 and gives an output signal, which is a measure of this movement and hence of lengthwise bale movement, to the computer 64.

The torque sensor 60 detects torque in the shaft 42 as part of the drive for the rolls 46 and has an output to the computer 64.

A manual switch 84 for the driver is located on the tractor 12 and linked to the computer 64 to enable the driver to select at will a desired density for the bale 76 by setting the predetermined amount of compressing load on the bale above which pressure in the hydraulic cylinder 54 is relieved. This facility is highly desirable when dealing with different crops and different conditions of crop.

In operation, the machine functions as follows. Hay from the windrow 14 is delivered rearwardly and upwardly through the inlet of the crop receiving portion 18 where it is rolled round upon itself by the rolls 46, driven through the gearbox 48, in a clockwise direction when viewed from right to left in Fig. 1, the rolls turning in an anti-clockwise direction. The crop also has a component of motion from right to left imparted to it by virtue of the frusto-conical form of the portion 18. Crop enters the portion along its entire length.

The crop passes smoothly from the receiving portion 18 to the discharge portion 22 and it reaches the abutment plate 52 at the latter's starting position in the portion 22 just downstream of the aperture 51 in Fig. 3, the crop still turning in the clockwise direction by virtue of the rotation of the rolls 48. The abutment plate 52 simply turns with the crop since it is free to do so. The piston and cylinder unit 24 has a relatively high pre-set pressure so that the abutment plate 52 offers a significant resistance to lengthwise movement of the bale. With the tractor still advancing, the pickup 20 still gathering and feeding the hay, and twine still being supplied, the crop is increasingly forced against the plate 52.

During this period the sensor 62 will be detecting the said movement of the bale, but this will slow with crop build-up against the plate 52 and finally cease. At this point the output to the computer 64 from the sensor 62 will be indicative of there being insufficient movement of the bale. At the same time the output of torque sensor 60 to the computer 64 will be indicative of a torque greater than a predetermined range. On receiving and comparing these outputs the computer 64 will cause, by its output, the flow valve 66 to relieve pressure in the unit 24 to the sump 68 thus allowing further movement of the bale. This sequence is repeated until a full-sized bale is formed.

If the crop being baled is wet slippage between the growing bale and the rolls 46, 50 may occur. This would be detected by the sensor 60 in that the torque would fall below the predetermined range. Little or no movement would also be detected by the sensor 62 although the force of the growing bale against the plate 52 would be less than for dry crop. Again, pressure in the unit 24 would be relieved.

When a full-sized bale has been achieved the cutter is triggered automatically into operation moving from its inoperative position gradually to its "cut completed" position severing the completed bale. The cutter automatically with draws, and gate 30 is triggered to open whereupon the bale falls through the gate onto the ground whence it can be loaded onto a waggon or other bale transporter for removal. The piston and cylinder unit 24 operates to return the plate 52 to its starting position, and the steps just described are repeated to make another bale.

There are many ways in which the above described design can be altered. For example, the piston and cylinder unit 24 can be arranged so that the plate 52 can be completely withdrawn from the end of the portion 22 to provide a sufficient gap through which the completed bale can be discharged endwise of the portion 22. This avoids the necessity to provide the gate 30.

The sensor 62 could be replaced by a sensor which detects insufficient movement of the bale by direct application to the cog wheel 74.

Although it is preferred positively to drive the rolls 50 of the discharge portion 22, they can be simply idler rolls.

The whole operation is continuous as the baling chamber is constantly fed with crop whilst baling, tying and discharge are taking place, and yet a reasonably firm bale can be produced in a simple manner with desirable density without undue stresses arising in the machine.

**Claims**

1. A bale density control system, for a baling machine as herein defined, comprising sensing means (60, 62) arranged to detect a compressing load on the bale (76) which exceeds a predetermined amount and means (64, 66) for adjusting pressure in the piston and cylinder unit (54, 56) operable to reduce resistance of the abutment plate (52) to the said bale movement on an overload being detected.

2. A control system according to claim 1 in which the sensing means comprises a sensor (62) arranged to detect insufficient lengthwise movement of the bale (76).

3. A control system according to claim 1 or 2 in which the sensing means comprises a sensor (60) arranged to detect torque in the drive (44) for said rolls (46) of the receiving portion (18) which differs from a predetermined range.

4. A control system according to claims 2 and 3 in which the movement sensor (62) and the torque sensor (60) have outputs, and the adjusting means comprises computing means (64), arranged to compare the outputs and to produce a resultant output, and a valve (66) arranged to regulate pressure at the piston and cylinder unit (54, 56) controlled by the said resultant output so that the resistance to bale movement afforded by the abutment plate (52) is relieved.

5. A control system according to any of claims 2 to 4 in which the movement sensor (62) comprises an arm (72) carrying a bale contact (74) the arm (72) being swingable on the contact (74) being moved by lengthwise movement of the bale, a sensing device (82), and a link (80) between the arm (72) and the sensing device (82), the sensing device (82) detecting via the link (80) insufficient movement of the arm (74) as a measure of insufficient lengthwise movement of the bale (76).

6. A control system according to claim 5 in which the bale contact comprises a wheel (74) mounted for free turning movement on the arm (72).

7. A control system according to claim 3 or claims 3 and any of claims 4 to 6 in which the torque sensor (60) is arranged on a main drive shaft (42) of the machine (10).

8. A control system according to claim 4 in which the valve (66) is arranged in a hydraulic line from the piston and cylinder unit (54, 56) to sump (68) so that it opens the line to sump (68) on the compressing load exceeding the predetermined amount.

9. A control system according to any preceding claim including a manual means (84) for selecting the said predetermined amount.

10. A control system according to claim 9 and claim 4 in which the manual means comprises a switch (84) having an output to the computing means (64).

11. A baling machine as herein defined having a control system according to any preceding claim.

FIG.1

FIG.2

FIG. 3

FIG. 4

FIG.5